# FASCICULE DE BREVET EUROPEEN

(11) **EP 2 739 384 B1**
(45) Date de publication et mention de la délivrance du brevet: **09.09.2015**
(21) Numéro de dépôt: 12758528.9
(22) Date de dépôt: 31.07.2012
(51) Int. Cl.: B01J 8/28, B01J 8/40, C21B 13/00

(54) **DISPOSITIF À PLUSIEURS CHAMBRES DE RÉACTION POUR LA MISE EN UVRE DE RÉACTIONS LIQUIDES/SOLIDES D'OXYDO-RÉDUCTION EN LIT FLUIDISÉ**
VORRICHTUNG MIT MEHREREN REAKTIONSKAMMERN ZUR DURCHFÜHRUNG FEST/FLÜSSIG-REDOXREAKTIONEN IN EINEM WIRBELBETT
DEVICE HAVING A PLURALITY OF REACTION CHAMBERS FOR IMPLEMENTING LIQUID/SOLID OXIDATION-REDUCTION REACTIONS IN A FLUIDIZED BED

(30) Priorité: 02.08.2011 FR 1102424
(43) Date de publication de la demande: 11.06.2014
(73) Titulaire: Cleanmetals SA, 1227 Carouge, Genève (CH)
(72) Inventeur: LANÇON, Franck, Antofagasta (CL)
(74) Mandataire: Talbot, Alexandre
(86) Numéro de dépôt international: PCT/FR2012/000321
(87) Numéro de publication internationale: WO 2013/017751

(56) Documents cités:
- WO-A1-03/080874
- FR-A1- 2 882 664
- US-A- 4 084 958
- US-A- 4 224 056

## Description

### Domaine technique de l'invention

L'invention concerne un dispositif de mise en oeuvre de réactions liquides/solides d'oxydo-réduction en lit fluidisé.

### État de la technique

Les réactions liquides/solides d'oxydo-réduction en lit fluidisé peuvent être utilisées dans plusieurs domaines, notamment en hydrométallurgie pour l'extraction de métaux dilués dans des solutions. Afin de favoriser ces réactions liquides/solides plusieurs dispositifs ont été proposés.

À titre d'exemple, la demande de brevet WO 00/47318 décrit un procédé de cémentation utilisant un réacteur à lit fluidisé. Afin d'améliorer l'efficacité de la réaction, le dispositif décrit est muni d'électroaimants permettant une agitation de la solution à traiter dans le corps du réacteur. Par ailleurs, la demande de brevet FR 2882664 décrit un dispositif de mise en oeuvre d'une cémentation utilisant des moyens ultrasonores d'agitation de la solution à traiter et des particules du métal réactif dans le dispositif. Les rendements des réactions mises en oeuvre par ces réacteurs classiques peuvent être insuffisants, surtout lorsque la solution à traiter est injectée à haut débit. Les dispositifs connus peuvent présenter également d'autres inconvénients provoquant une pollution des solides formés par le métal réactif ainsi que des composés présents dans la solution injectée.

### Objet de l'invention

L'invention a pour but une amélioration des rendements des réactions liquides/solides d'oxydo-réduction en lit fluidisé mises en oeuvre par les dispositifs connus accompagnée d'une réduction de la pollution des solides formés.

On tend vers cet objectif en ce que le dispositif comporte un corps de réacteur s'étendant le long d'un axe longitudinal, des moyens d'injection d'une solution à traiter via une première extrémité du corps de réacteur selon l'axe longitudinal, des moyens d'introduction d'un métal réactif via une seconde extrémité du corps du réacteur opposée à la première extrémité selon l'axe longitudinal, des moyens d'agitation de la solution dans le corps du réacteur, et un compartiment de finition monté à la seconde extrémité du corps du réacteur et relié à des moyens d'évacuation de la solution traitée. En outre le corps du réacteur du dispositif comporte deux chambres de réaction distinctes, chaque chambre de réaction ayant, perpendiculairement à l'axe longitudinal, une section constante, les dites sections des deux chambres de réaction étant différentes et croissantes de la première extrémité à la seconde extrémité.

Préférentiellement, les moyens d'évacuation sont raccordés à un réacteur additionnel muni de moyens mécaniques d'agitation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente schématiquement un dispositif selon l'invention.
- la figure 2 représente un mode particulier de réalisation d'un dispositif selon l'invention comportant un réacteur additionnel raccordé au dispositif selon la figure 1 ;
- la figure 3 représente un mode particulier de réalisation d'un montage en parallèle de dispositifs selon la figure 1 ;
- la figure 4 représente un mode particulier de réalisation d'un montage en série de dispositifs selon la figure 1.

### Description de modes particuliers de réalisation

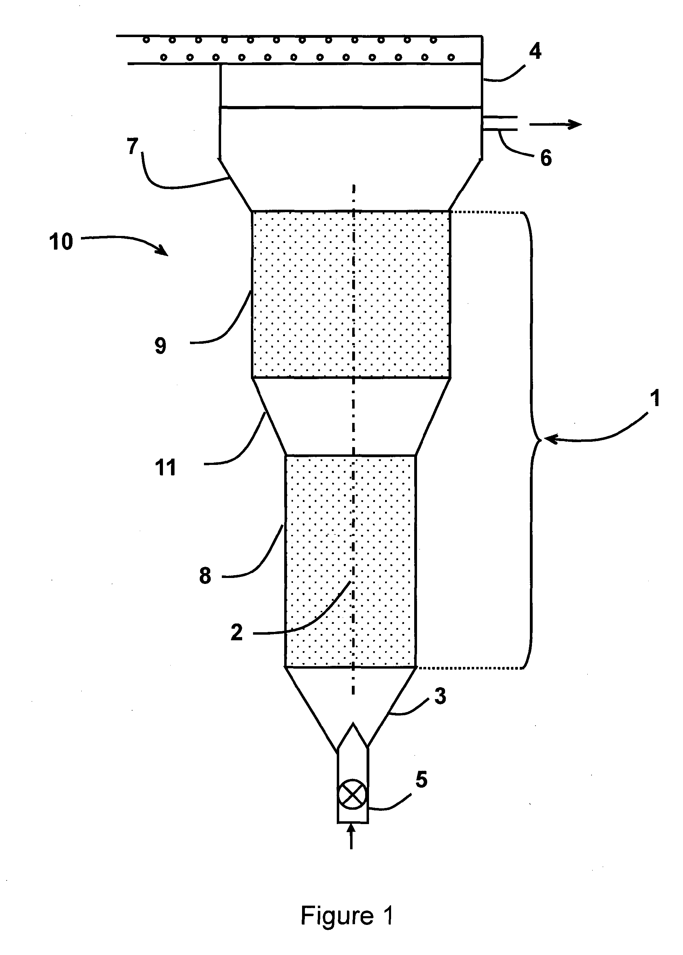

Comme représenté à la figure 1, le dispositif 10 de mise en oeuvre de réactions liquides/solides d'oxydo-réduction comporte classiquement un corps de réacteur 1 s'étendant le long d'un axe longitudinal 2. Le dispositif 10 comporte également des moyens d'injection d'une solution à traiter et des moyens d'introduction d'un métal réactif. Le corps de réacteur 1 est avantageusement disposé, selon l'axe longitudinal 2, entre une chambre d'injection 3 et une trémie de chargement 4. Les moyens d'injection sont destinés à injecter une solution à traiter via une première extrémité du corps de réacteur 1, et peuvent comporter la chambre d'injection 3 connectée à un conduit d'alimentation 5.

La chambre d'injection 3 a préférentiellement, une forme évasée vers le corps de réacteur 1. De préférence, la chambre d'injection 3 est configurée de manière à réduire au maximum les turbulences engendrées par la vitesse de la solution injectée.

Le métal réactif est introduit par les moyens d'introduction via une seconde extrémité du corps de réacteur 1 opposée à la première extrémité selon l'axe longitudinal 2. Les moyens d'introduction du métal réactif peuvent comporter la trémie de chargement 4 qui a pour fonction l'introduction du métal réactif généralement sous forme de billes, par exemple de la grenaille de fer.

Le conduit d'alimentation 5 peut être muni d'un clapet anti-retour, et permettre une circulation de la solution de la première extrémité vers la deuxième extrémité du corps de réacteur 1 en formant un lit fluidisé entre les moyens d'injection 5 et des moyens d'évacuation de la solution à traiter. De préférence, la circulation de la solution dans le corps de réacteur 1 est une circulation ascendante. Autrement dit le corps de réacteur 1 est vertical, la première extrémité étant orientée vers le bas.

Par ailleurs, le dispositif 10 comporte un compartiment de finition 7 monté à la seconde extrémité du corps de réacteur 1. Le compartiment de finition 7 a préférentiellement, une forme évasée depuis la seconde extrémité du corps de réacteur 1, et il est relié aux moyens d'évacuation de la solution traitée comportant par exemple le conduit d'évacuation 6. Cet évasement du compartiment de finition 7 génère une réduction importante de la vitesse linéaire du mélange de la solution à traiter et des particules de métal réactif dans le compartiment de finition 7 avant son évacuation.

Selon l'invention, le corps de réacteur 1 comporte au moins deux chambres de réaction 8 et 9 distinctes. Les deux chambres 8 et 9 ayant chacune, perpendiculairement à l'axe longitudinal 2, une section constante. Les sections respectives des chambres de réaction 8 et 9 sont différentes et croissantes en allant de la première extrémité à la seconde extrémité du corps de réacteur 1. Les sections des chambres de réactions 8 ou 9 peuvent être de forme circulaire ou encore de forme rectangulaire. Le corps de réacteur 1 peut être réalisé à partir de profilés en matière plastique préférentiellement, transparente permettant ainsi de surveiller l'évolution de la taille des particules du métal réactif pendant les réactions liquides/solides. L'utilisation des deux chambres de réaction permet d'améliorer les rendements du dispositif de mise en oeuvre de réactions liquides/solides. L'homme du métier pourra, en fonction des applications, utiliser plus de deux chambres de réaction du moment qu'elles ont des sections différentes et croissantes en allant de la première à la seconde extrémité du corps de réacteur 1.

Les chambres de réaction 8 et 9 peuvent être connectées entre elles par un élément de jonction 11 configuré pour adapter la forme de la chambre de réaction 8 à celle de la chambre de réaction 9. De préférence, l'élément de jonction 11 est en forme de cône ou de trapèze, et il est évasé vers la seconde extrémité du corps de réacteur 1. Une forme évasée permet à la fois, d'éviter l'accumulation du métal réactif dans l'élément de jonction 11 et de réduire la vitesse linéaire de la solution en passant de la chambre de réaction 8 à la chambre de réaction 9.

Par ailleurs, les chambres de réaction 8 et 9 sont munies de moyens d'agitation appropriés, non représentés à la figure 1, qui permettent d'agiter le mélange de la solution et du métal réactif dans le corps de réacteur 1. Les moyens d'agitation peuvent, par exemple, être de type électromagnétique ou encore de type ultrasonore. Les moyens d'agitation de type électromagnétique sont plus particulièrement adaptés aux chambres de réaction de cémentation dans lesquelles les particules de métal réactif comportent du fer. Les moyens d'agitation de type électromagnétique peuvent comporter par exemple, des électroaimants constitués chacun par un enroulement de fil de cuivre autour d'un noyau de fer doux.

Avantageusement, les moyens d'agitation sont de type ultrasonore. Autrement dit, les moyens d'agitation de la solution dans le corps de réacteur 1 comportent des transducteurs ultrasonores répartis à la périphérie d'une chambre de réaction 8 ou 9 associée. De préférence, les transducteurs ultrasonores sont répartis de la première à la seconde extrémité du corps de réacteur 1 et sont décalés latéralement les uns par rapport aux autres. La distribution de transducteurs ultrasonores tout le long du corps de réacteur 1 permet d'accroître les cinétiques des réactions chimiques dans le dispositif 10. Ce type de moyens d'agitation permet avantageusement, d'utiliser des billes de métal réactif amagnétique, comme le zinc, ainsi que d'établir des lits mixtes avec des billes de différentes sortes, en pondérant la taille de celles-ci en fonction de leur densité.

Les particules de métal réactif introduites via la trémie de chargement 4 ont généralement une granulométrie unique. Au fur et à mesure de la réaction la taille des particules de métal réactif diminue. En utilisant un corps de réacteur muni des chambres de réaction 8 et 9, la réduction progressive de la taille des particules de métal réactif s'accompagne, notamment lorsque la solution est injectée à haut débit, d'un déplacement des particules dont la taille a diminué de la chambre de réaction 8 à la chambre de réaction 9 ayant une section plus grande. Un lit fluidisé est alors maintenu dans la chambre de réaction 9 mais également dans la chambre de réaction 8 qui comporte des particules de métal réactif ayant une taille plus importante que celle des particules de la chambre de réaction 9.

Ainsi, à débit égal, les particules de métal réactif entraînées hors du lit fluidisé, en direction du conduit d'évacuation 6 restent plus longtemps dans les chambres de réaction 8 et 9. Le lit fluidisé est maintenu, même à haut débit d'injection de la solution, dans le corps de réaction 1 malgré la diminution de la taille des particules de métal réactif lors de la réaction liquides/solides. Par haut débit, on entend un débit supérieur à 30 m³/h. Les particules de métal réactif évacuées ont alors des tailles moins importantes que dans les dispositifs connus. Le corps de réacteur 1 comportant les chambres de réaction 8 et 9 permet avantageusement, d'augmenter la surface de contact liquides/solides et d'améliorer la cinétique de la réaction, permettant ainsi de faire des économies sur la quantité de métal réactif introduit dans le corps de réacteur 1.

Le dispositif 10 de mise en oeuvre de réactions liquides/solides d'oxydoréduction en lit fluidisé peut comporter également un élément de séparation liquides/solides muni d'un filtre, non représenté à la figure 1 et avantageusement situé en aval des moyens d'évacuation 6. Avantageusement, l'élément de séparation liquides/solides comporte un élément d'injection d'un liquide neutre dans le filtre à contre-courant de la solution traitée. L'élément d'injection d'un liquide neutre permet de substituer la solution traitée résiduelle présente dans le gâteau de filtration par un liquide neutre. Par gâteau de filtration, on entend le solide séparé de la solution traitée. De préférence, cette injection est réalisée en fin de réaction liquides/solides mais également dans des conditions de densité du gâteau de filtration permettant la substitution de la solution traitée résiduelle par un liquide neutre. L'injection du liquide neutre est préférentiellement, réalisée de manière à éviter la génération de canaux préférentiels qui peuvent laisser des parties du gâteau de filtration immune à la substitution de la solution résiduelle par le liquide neutre.

L'élément d'injection d'un liquide neutre permet avantageusement, de réduire la pollution des solides formés par les réactions liquides/solides d'oxydoréduction avec des composés chimiques présents dans les solutions à traiter. À titre d'exemple, l'utilisation d'un élément d'injection d'un liquide neutre permet de baisser la teneur en chlore et en arsenic dans un cément de cuivre respectivement, de 20 % à 3 % et de 8 % à 0,5 %.

Un corps de réacteur comportant au moins deux chambres de réaction selon l'invention permet avantageusement, d'augmenter le temps de réaction entre la solution et le métal réactif en lit fluidisé. Ainsi, le rendement des réactions liquides/solides d'oxydo-réduction est amélioré. De plus, le dispositif selon l'invention permet, même à haut débit, de maintenir le métal réactif dans le corps de réacteur et, ainsi de réduire la pollution du solide formé par la réaction liquide/solide par le métal réactif.

L'efficacité d'une réaction liquides/solides d'oxydo-réduction en lit fluidisé dépend fortement du nombre de particules de métal réactif maintenues en fluidisation au cours de la réaction. Le nombre de particules de métal réactif en fluidisation change en fonction de l'évolution du mélange composé par la solution en traitement, les particules de métal réactif et la poudre du solide formé par les réactions liquides/solides d'oxydo-réduction. Dès lors, il est avantageux que les moyens d'introduction 4 d'un métal réactif via la seconde extrémité du corps de réacteur 1 comportent un système de gestion de la quantité introduite dudit métal réactif. Ainsi cette quantité introduite peut varier au cours de la réaction.

Au fur et à mesure de la réalisation de la réaction, une quantité optimale du métal réactif est introduite dans le corps de réacteur 1 du dispositif 10. La quantité du métal réactif ajoutée n'est ni linéaire, par rapport au temps de la réaction, ni empirique. La quantité de métal réactif est calculée par un algorithme en fonction du débit de la solution et des concentrations mesurées du solide à former dans la solution à traiter avant son injection dans le corps de réacteur 1 et après son évacuation. Ainsi, l'algorithme permet de gérer la quantité de métal réactif introduit dans le corps de réacteur 1 au cours des réactions liquides/solides. Lors d'une utilisation d'une solution à traiter acide, l'algorithme peut également prendre en considération le degré d'acidité pour optimiser l'introduction de la quantité de métal réactif de manière à éviter la réaction de dissolution du métal réactif par l'acide contenu dans la solution.

La gestion de l'introduction des particules de métal réactif permet avantageusement, d'augmenter la surface de contact entre le métal réactif et la solution et, en conséquence, d'augmenter le coefficient de transfert des échanges réactionnels entre les particules de métal réactif et la solution à traiter.

Un premier exemple permet de comparer les rendements des réactions liquides/solides d'oxydo-réduction mises en oeuvre dans des premier et second dispositifs. Le premier dispositif dit « classique » selon l'art antérieur, est muni d'une seule chambre de réaction et le second dispositif est muni de deux chambres de réaction associées à un compartiment de finition, configuré selon un mode de réalisation de l'invention. La solution à traiter est injectée et évacuée dans les deux dispositifs avec des hauts débits, supérieurs à 20 m³/h. La solution à traiter est une PLS de cuivre à 5 g/l ayant des température et PH constants (PLS du terme usuel anglais « Pregnant Leaching Solution »). Le métal réactif est introduit dans les premier et second dispositifs sous forme de billes de fer d'un diamètre d'environ 1,8 mm. Lors de la réaction, le lit fluidisé s'étend dans les deux chambres de réaction du second dispositif. Le tableau 1 ci-dessous représente une comparaison entre les rendements des réactions liquides/solides d'oxydo-réduction mises en oeuvre dans les premier et second dispositifs avec différents débits de la solution à traiter.

**Tableau 1**

| Débit (m³/h) | Rendement (%) | |
|---|---|---|
| | Dispositif à une chambre de réaction | Dispositif à deux chambres de réaction |
| 25 | 71 | 99 |
| 30 | 62 | 99 |
| 35 | 55 | 98 |
| 40 | 50 | 98 |

Le tableau 1 montre que le rendement de la réaction liquides/solides d'oxydo-réduction réalisée dans le second dispositif muni de deux chambres de réaction est largement supérieur à celui associé au premier dispositif classique. En effet, pour un débit de 25 m³/h de la solution à traiter, le rendement de la réaction mise en oeuvre dans le premier dispositif est de 71 % alors qu'il est de 99 % lorsque la réaction est réalisée dans le second dispositif. Le tableau 1 montre également qu'en utilisant le premier dispositif, les rendements diminuent fortement de 71 % à 50 % lorsque le débit de la solution augmente de 25 m³/h à 40 m³/h. L'utilisation du second dispositif permet d'obtenir un rendement d'environ 99 % qui reste sensiblement constant avec l'augmentation du débit de la solution.

De plus, en utilisant le second dispositif et un débit de la solution égale à 35 m³/h, la teneur en fer dans le cément de cuivre obtenu reste inférieure à 1 %. Suivant les mêmes conditions de réaction mais en en utilisant le premier dispositif classique la teneur en fer augmente et reste supérieure à 5 %.

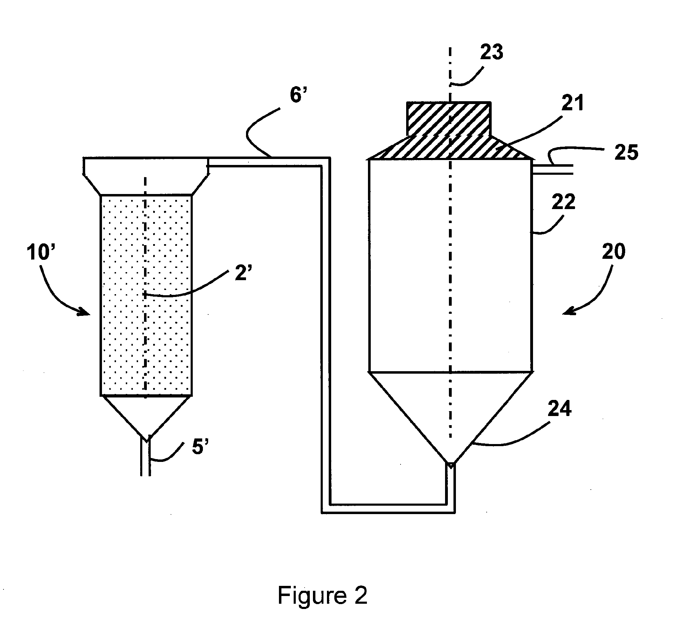

Selon un autre mode de réalisation représenté à la figure 2, un réacteur additionnel 20 muni de moyens mécaniques 21 d'agitation est raccordé à un dispositif 10' de mise en oeuvre de réactions liquides/solides d'oxydoréduction via des moyens d'évacuation 6'. Préférentiellement, le dispositif 10' est un dispositif selon le premier mode de réalisation de l'invention. Le dispositif 10' peut être également un dispositif de mise en oeuvre de réactions liquides/solides d'oxydo-réduction à une chambre de réaction.

Le réacteur additionnel 20 comporte une partie centrale 22 préférentiellement de forme cylindrique et s'étendant le long d'un axe longitudinal 23. De préférence, les axes longitudinaux 2' du dispositif 10', et 23 de la partie centrale 22 sont sensiblement parallèles. Le réacteur additionnel 20 comporte également un dispositif d'alimentation 24 monté à une première extrémité de la partie centrale selon l'axe longitudinal 23. De préférence, la partie centrale a une forme cylindrique et le dispositif d'alimentation 24 a une forme conique. Le dispositif d'alimentation 24 est raccordé au conduit d'évacuation 6' du dispositif 10'. Ce raccordement permet l'injection dans le réacteur additionnel 20 de la solution traitée pouvant comporter des produits résiduels de la réaction liquides/solides d'oxydo-réduction en lit fluidisé réalisée dans le dispositif 10'. Ainsi des réactions liquides/solides d'oxydoréduction dites d'un second niveau sont mises en oeuvre et permettent de traiter un mélange comportant lesdits produits résiduels.

L'évacuation du mélange traité, dans le réacteur additionnel 20, est réalisée au niveau d'une deuxième extrémité de la partie centrale 22 opposée à la première extrémité selon l'axe longitudinal 23 où est disposé un dispositif d'évacuation 25. De ce fait, l'injection des produits résiduels dans le réacteur additionnel 20 permet de créer une circulation de la première à la seconde extrémité de la partie centrale 22. De préférence, cette circulation est ascendante et l'évacuation est en surverse. Avantageusement, le volume du réacteur additionnel 20 est de 5 à 10 fois supérieur à celui du dispositif classique 10' à une chambre de réaction, ce qui permet d'augmenter significativement le temps de résidence des produits résiduels dans le milieu réactionnel du réacteur additionnel 20. Un grand volume du réacteur additionnel 20 permet également de ne pas diminuer le débit général d'une installation comportant le dispositif 10' et le réacteur additionnel 20 raccordés entre eux.

Le réacteur additionnel 20 comporte également des moyens mécaniques 21 d'agitation. Les moyens mécaniques 21 peuvent maintenir une agitation constante des produits résiduels permettant ainsi d'éviter la décantation des produits solides formés. Afin d'augmenter le rendement des réactions, le réacteur additionnel 20 est muni de moyens mécaniques 21, d'agitation circulaire et/ou d'agitation verticale. À titre d'exemple, l'agitateur circulaire peut comporter des pales, et l'agitation verticale peut être déterminée par le dessin des pales de l'agitateur circulaire. Les moyens mécaniques 21 d'agitation circulaire conjuguée à une agitation verticale permettent ainsi d'entrainer les solides formés par la réaction vers la surface du liquide où ils sont entrainés dans le circuit. De préférence, la puissance d'agitation générée par les moyens mécaniques 21 d'agitation est supérieure à 150 tr/min. Une telle puissance permet avantageusement, d'éviter la formation parasite, dans le réacteur additionnel 20, de particules du métal formé.

Un réacteur additionnel 20 et un dispositif de mise en oeuvre de réactions liquides/solides en lit fluidisé selon le premier mode de réalisation sont complémentaires. En effet, le métal réactif de la réaction mise en oeuvre dans le réacteur additionnel 20 est constitué de la poudre du métal réactif, résiduelle de la réaction liquides/solides réalisée dans le dispositif 10. Au cours de la réaction liquides/solides en lit fluidisé, la granulométrie des particules de métal réactif est progressivement réduite dans le dispositif 10 jusqu'à atteindre une valeur de l'ordre de quelques centaines de µm. Ces micro particules sont alors emportées par le débit de la solution traitée en dehors du dispositif à lit fluidisé selon le premier mode de réalisation vers le réacteur additionnel 20.

Un deuxième exemple permet de comparer les rendements des réactions liquides/solides d'oxydo-réduction mises en oeuvre dans un premier dispositif à lit fluidisé classique et un deuxième dispositif comportant un réacteur additionnel muni de moyens mécaniques d'agitation selon un mode particulier de l'invention. Dans cet exemple, une solution à traiter et un métal réactif de même type que ceux utilisés dans le premier exemple, décrit ci-dessus, ont été introduits dans les dispositifs à comparer. Avec un débit de 30 m³/h de la solution dans le réacteur à lit fluidisé, il a été observé que le montage d'un réacteur additionnel permet de faire passer le rendement de la réaction liquides/solides de 62 % à 83 %. Le rendement de 83 % a été obtenu par le réacteur additionnel muni uniquement de moyens mécaniques d'agitation circulaire. L'utilisation de moyens mécaniques d'agitation circulaire associée à une agitation verticale permet d'améliorer davantage le rendement pour atteindre une valeur de 98 %.

Un troisième exemple permet de comparer une série de réactions liquides/solides mises en oeuvre avec un débit constant de la solution égale à 20 m³/h et en utilisant un poids constant de métal réactif, en l'occurrence du fer. Les réactions sont réalisées en faisant varier pour les différentes réactions de la série le diamètre des billes de fer de 1,1 mm à 2,2 mm. Les réactions liquides/solides d'oxydo-réduction à lit fluidisé ont été réalisées dans les mêmes dispositifs que ceux du deuxième exemple. Le tableau 2 ci-dessous représente une comparaison entre les rendements de la série des réactions liquides/solides du troisième exemple.

**Tableau 2**

| Diamètre (mm) | Rendement (%) | |
|---|---|---|
| | Dispositif sans réacteur additionnel | Dispositif comportant un réacteur additionnel |
| 1,5 | 85 | 98 |
| 1,8 | 85 | 98 |
| 2,0 | 85 | 98 |
| 2,2 | 82 | 98 |

Le tableau 2 montre que pour une utilisation d'un premier dispositif classique le rendement de la réaction liquides/solides d'oxydo-réduction peut diminuer lorsque la taille des billes de fer devient importante. En fait, l'augmentation de la taille des particules du métal réactif engendre une diminution de la surface de contact liquides/solides causant ainsi une diminution du rendement de la réaction de 85 % à 82 %. Le tableau 2 montre également que lorsque le dispositif de réaction comporte un réacteur additionnel selon le deuxième mode de réalisation de l'invention, le rendement de la réaction reste constant avec l'augmentation du diamètre et il atteint une valeur de 98 %.

Par ailleurs, l'analyse des céments de cuivre montre qu'en utilisant le dispositif à lit fluidisé classique, la teneur en fer dans le cément de cuivre passe de 2 à 5 % lorsque la taille des billes de fer passe de 2,2 mm à 1,5 mm. Le montage d'un réacteur additionnel selon l'invention permet avantageusement, de diminuer fortement la teneur en fer dans le cément de cuivre pour atteindre une valeur inférieure à 0,1 %.

Le raccordement du dispositif de mise en oeuvre de réactions liquides/solides en lit fluidisé avec un réacteur additionnel muni de moyens mécaniques d'agitation permet avantageusement d'améliorer le rendement de la réaction et de diminuer la pollution du solide formé par la réaction liquides/solides par le métal réactif.

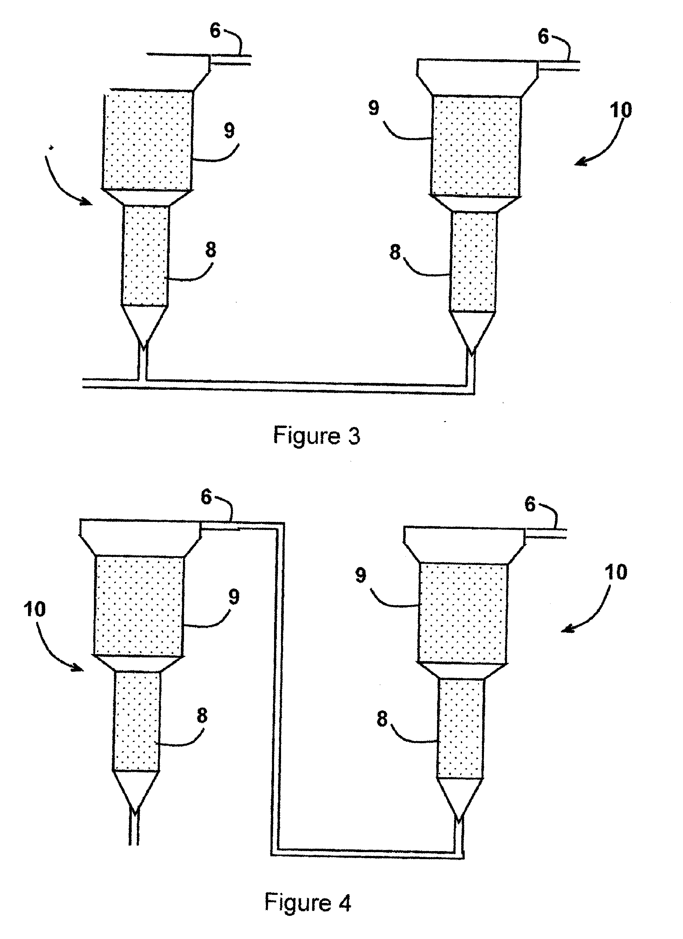

Comme représenté aux figures 3 et 4, deux dispositifs du même type que le dispositif 10 selon l'invention peuvent être montés en parallèle ou bien en série respectivement. Autrement dit, on peut prévoir un système de mise en oeuvre de réactions liquides/solides d'oxydo-réduction en lit fluidisé comportant deux dispositifs 10 selon l'invention.

Comme représenté à la figure 3, les dispositifs 10 sont montés en parallèle : leurs moyens d'injection 5 de la solution à traiter et d'évacuation 6 de la solution traitée étant communs. Le montage en parallèle permet avantageusement, d'utiliser un seul circuit d'alimentation en solution à traiter pour l'ensemble des dispositifs 10 montés en parallèle. Le circuit d'alimentation permet d'injecter un volume de la solution à traiter dans chaque dispositif 10 avec des débits pouvant dépendre de chaque dispositif 10. Préférentiellement, un réacteur du même type que le réacteur additionnel 20 peut être raccordé aux conduits d'évacuation 6 des dispositifs 10 montés en parallèle.

Comme représenté à la figure 4, les deux dispositifs du même type que le dispositif 10 selon l'invention peuvent être montés en série. Les moyens d'évacuation 6 d'un premier dispositif formant, ainsi, les moyens d'injection 5 d'un second dispositif. Le montage en série permet avantageusement, de traiter des solutions fortement concentrées, et injectées à des débits importants.

## Revendications

1. Dispositif (10) de mise en oeuvre de réactions liquides/solides d'oxydoréduction en lit fluidisé comportant :
- un corps de réacteur (1) s'étendant le long d'un axe longitudinal (2) ;
- des moyens (5) d'injection d'une solution à traiter via une première extrémité du corps de réacteur (1) selon l'axe longitudinal (2) ;
- des moyens (4) d'introduction d'un métal réactif via une seconde extrémité du corps de réacteur (1) opposée à la première extrémité selon l'axe longitudinal (2) ;
- des moyens d'agitation de la solution dans le corps du réacteur (1) ;
- un compartiment de finition (7) monté à la seconde extrémité du corps du réacteur et relié à des moyens (6) d'évacuation de la solution traitée ;
dispositif **caractérisé en ce que** :
- le corps de réacteur (1) comporte deux chambres de réaction (8, 9) distinctes, chaque chambre de réaction ayant, perpendiculairement à l'axe longitudinal (2), une section constante, lesdites sections des deux chambres de réaction (8, 9) étant différentes et croissantes de la première extrémité à la seconde extrémité.

2. Dispositif selon la revendication 1, **caractérisé en ce que** les moyens (6) d'évacuation sont raccordés à un réacteur additionnel (20) muni de moyens mécaniques (21) d'agitation de la solution traitée évacuée.

3. Dispositif selon la revendication 2, **caractérisé en ce que** le réacteur additionnel (20) est muni de moyens mécaniques (21) d'agitation circulaire et/ou d'agitation verticale.

4. Dispositif selon l'une quelconque des revendications 1 à 3, **caractérisé en ce que** les moyens d'agitation de la solution dans le corps de réacteur (1) comportent des transducteurs ultrasonores répartis à la périphérie d'une chambre de réaction associée.

5. Dispositif selon l'une quelconque des revendications 1 à 4, **caractérisé en ce que** les moyens d'introduction (4) d'un métal réactif via la seconde extrémité du corps de réacteur (1) comportent un système de gestion de la quantité introduite dudit métal réactif.

6. Dispositif selon l'une quelconque des revendications 1 à 5, **caractérisé en ce qu'**il comporte un élément de séparation liquide/solide, muni d'un filtre de la solution traitée disposée en aval des moyens d'évacuation (6) et **en ce qu'**il comporte un élément d'injection d'un liquide neutre dans le filtre à contre-courant de la solution à filtrer.

7. Système de mise en oeuvre de réactions liquides/solides d'oxydoréduction en lit fluidisé **caractérisé en ce qu'**il comporte deux dispositifs selon la revendication 1.

8. Système de mise en oeuvre de réactions liquides/solides d'oxydoréduction en lit fluidisé selon la revendication 7, **caractérisé en ce que** les dispositifs sont montés en parallèle, leurs moyens d'injection (5) de la solution à traiter et d'évacuation (6) de la solution traitée étant communs.

9. Système de mise en oeuvre de réactions liquides/solides d'oxydoréduction en lit fluidisé selon la revendication 7, **caractérisé en ce que** les dispositifs sont montés en série, les moyens d'évacuation (6) d'un premier dispositif formant les moyens d'injection (5) d'un second dispositif.

## Patentansprüche

1. Vorrichtung (10) zur Durchführung von Oxidations-Reaktions-Flüssig-/Festreaktionen im Wirbelbett, die umfasst:
- einen Reaktorkörper (1), der sich entlang einer Längsachse (2) erstreckt;
- Mittel (5) zum Einspritzen einer zu behandelnden Lösung über ein erstes Ende des Reaktorkörpers (1) entlang der Längsachse (2);
- Mittel (4) zum Einspritzen eines reaktiven Metalls über ein zweites, zum ersten Ende entgegengesetztes Ende des Reaktorkörpers (1) entlang der Längsachse (2);
- Mittel zum Umrühren der Lösung im Reaktorkörper (1);
- eine Endbearbeitungskammer (7), die am zweiten Ende des Reaktorkörpers montiert und mit Mitteln (6) zum Ablassen der behandelten Lösung verbunden ist;
Vorrichtung, die **dadurch gekennzeichnet ist, dass**:
- der Reaktorkörper (1) zwei verschiedene Reaktionskammern (8, 9) umfasst, wobei jede Reaktionskammer quer zur Längsachse (2) einen konstanten Querschnitt hat, wobei die Querschnitte der beiden Reaktionskammern (8, 9) unterschiedlich und zunehmend vom ersten zum zweiten Ende sind.

2. Vorrichtung nach Anspruch 1, **dadurch gekennzeichnet, dass** die Mittel (6) zum Ablassen an einen zusätzlichen Reaktor (20) angeschlossen sind, der mit mechanischen Mitteln (21) zum Umrühren der abgelassenen, behandelten Lösung versehen ist.

3. Vorrichtung nach Anspruch 2, **dadurch gekennzeichnet, dass** der zusätzliche Reaktor (20) mit mechanischen Mitteln (21) zum zirkulären und/oder vertikalen Umrühren versehen ist.

4. Vorrichtung nach einem der Ansprüche 1 bis 3, **dadurch gekennzeichnet, dass** die Mittel zum Umrühren der Lösung im Reaktorkörper (1) Ultraschallwandler umfassen, die am Umfang einer zugehörigen Reaktionskammer verteilt sind.

5. Vorrichtung nach einem der Ansprüche 1 bis 4, **dadurch gekennzeichnet, dass** die Mittel zum Einleiten (4) eines reaktiven Metalls über das zweite Ende des Reaktorkörpers (1) ein System zum Steuern der eingeleiteten Menge reaktiven Metalls umfassen.

6. Vorrichtung nach einem der Ansprüche 1 bis 5, **dadurch gekennzeichnet, dass** sie ein Fest-Flüssig-Trennungselement umfasst, das mit einem Filter für die behandelte Lösung versehen ist, das den Mitteln zum Ablassen (6) nachgeschaltet ist, sowie dadurch, dass sie ein Element zum Einspritzen einer neutralen Flüssigkeit in den Filter entgegengesetzt zur Strömungsrichtung der zu filtrierenden Lösung umfasst.

7. System zur Durchführung von Oxidations-Reaktions-Flüssig-/Festreaktionen im Wirbelbett, **dadurch gekennzeichnet, dass** es zwei Vorrichtungen nach Anspruch 1 umfasst.

8. System zur Durchführung von Oxidations-Reaktions-Flüssig-/Festreaktionen im Wirbelbett nach Anspruch 7, **dadurch gekennzeichnet, dass** die Vorrichtungen parallel zueinander montiert sind und ihre Mittel zum Einspritzen (5) der zu behandelnden Lösung und zum Ablassen (6) der behandelten Lösung gemeinsame Mittel sind.

9. System zur Durchführung von Oxidations-Reaktions-Flüssig-/Festreaktionen im Wirbelbett nach Anspruch 7, **dadurch gekennzeichnet, dass** die Vorrichtungen in Serie montiert sind, wobei die Mittel zum Ablassen (6) einer ersten Vorrichtung die Mittel zum Einspritzen (5) einer zweiten Vorrichtung bilden.

## Claims

1. A device (10) for carrying out liquid/solid redox reactions in a fluidized bed comprising:
- a reactor body (1) extending along a longitudinal axis (2);
- means (5) for injecting a solution to be processed via a first end of the reactor body (1) along the longitudinal axis (2);
- means (4) for performing feeding of a reactive metal via a second end of the reactor body (1) opposite the first end along the longitudinal axis (2);
- means for stirring the solution in the reactor body (1);
- a finishing compartment (7) mounted at the second end of the reactor body and connected to expel means (6) of the processed solution;
a device **characterized in that**:
- the reactor body (1) comprises two distinct reaction chambers (8, 9), each reaction chamber having a constant cross-section, perpendicularly to the longitudinal axis (2), said cross-sections of the two reaction chambers (8, 9) being different and increasing from the first end to the second end.

2. The device according to claim 1, **characterized in that** the expel means (6) are connected to an additional reactor (20) provided with mechanical stirring means (21) of the expelled processed solution.

3. The device according to claim 2, **characterized in that** the additional reactor (20) is provided with a mechanical means (21) for performing circular stirring and/or vertical stirring.

4. The device according to any one claims 1 to 3, **characterized in that** the stirring means of the solution in the reactor body (1) comprise ultrasonic transducers arranged at the periphery of an associated reaction chamber.

5. The device according to any one claims 1 to 4, **characterized in that** the means (4) for feeding a reactive metal via the second end of the reactor body (1) comprise a management system of the input quantity of said reactive metal.

6. The device according to any one claims 1 to 5, **characterized in that** it comprises a liquid/solid separation element provided with a filter of the processed solution arranged down-line from the expel means (6) and **in that** it comprises a injecting element of a neutral liquid into the filter with an opposite direction of flow to that of the solution to be filtered.

7. A system for carrying out liquid/solid redox reactions in a fluidized bed **characterized in that** it comprises two devices according to claim 1.

8. The system for carrying out liquid/solid redox reactions in a fluidized bed according to claim 7, **characterized in that** the devices are assembled in parallel, their injecting means of the solution to be processed and expel means (6) of the processed solution being common.

9. The system for carrying out liquid/solid redox reactions in a fluidized bed according to claim 7, **characterized in that** the devices are assembled in series, the expel means (6) of a first device forming the injecting means (5) of a second device.
